# EUROPÄISCHE PATENTSCHRIFT

(11) **EP 1 525 518 B1**
(45) Veröffentlichungstag und Bekanntmachung des Hinweises auf die Patenterteilung: **04.09.2013**
(21) Anmeldenummer: 03766223.6
(22) Anmeldetag: 18.07.2003
(51) Int. Cl.: G05B 19/04, G06F 9/445, H04L 29/06, H04L 12/40, G05B 19/042, H04L 12/24, H04L 12/28

(54) **VERFAHREN ZUM AKTUALISIEREN VON GERÄTEBESCHREIBUNGEN FÜR FELDGERÄTE DER PROZESSAUTOMATISIERUNGSTECHNIK**
METHOD FOR UPDATING DEVICE DESCRIPTIONS FOR FIELD DEVICES IN PROCESS AUTOMATION TECHNOLOGY
PROCEDE D'ACTUALISATION DE DESCRIPTIONS D'APPAREILS POUR DES APPAREILS DE TERRAIN EMPLOYES DANS L'AUTOMATISATION DE PROCESSUS

(30) Priorität: 26.07.2002 DE 10234304
(43) Veröffentlichungstag der Anmeldung: 27.04.2005
(73) Patentinhaber: Endress + Hauser GmbH + Co. KG, 79689 Maulburg (DE)
(72) Erfinder: SEGER, Andrea, 79650 Schopfheim (DE); VON STEIN, Bert, 79183 Waldkirch (DE)
(74) Vertreter: Andres, Angelika Maria
(86) Internationale Anmeldenummer: PCT/EP2003/007839
(87) Internationale Veröffentlichungsnummer: WO 2004/013712

(56) Entgegenhaltungen:
- EP-A- 0 989 713
- WO-A-02/39638
- DE-A- 10 029 448
- US-A- 6 047 222
- US-A1- 2002 004 370

## Beschreibung

Die Erfindung betrifft ein Verfahren zum Aktualisieren von Gerätebeschreibungen für Feldgeräte der Prozessautomatisierungstechnik gemäß dem Oberbegriff des Anspruchs 1.

In der Prozessautomatisierungstechnik werden vielfach Feldgeräte zur Erfassung und Beeinflussung von Prozessvariablen eingesetzt. Beispiele für Feldgeräte sind Temperaturmessgeräte, die die Temperatur eines Prozessmediums erfassen, Durchflussmesser, die den Durchfluss eines Prozessmediums in einem Rohrleitungsabschnitt erfassen oder Füllstandsmesser, die den Füllstand einer Flüssigkeit oder eines Schüttguts in einem Behälter erfassen.

Die Feldgeräte sind in der Regel über einen Datenbus mit übergeordneten Steuereinheiten z. B. Prozessleitsysteme PLS oder Engineering-System verbunden, von denen aus der Prozessablauf gesteuert bzw. überwacht wird und auch ein direkter Zugriff auf einzelne Feldgeräte möglich ist. Durch den direkten Zugriff auf das Feldgerät können von der Steuereinheit aus Einstellungen am Feldgerät geändert werden oder Diagnosefunktionen des Feldgerätes aufgerufen werden. In der Steuereinheit werden die Messwerte der verschiedenen Sensoren ausgewertet bzw. überwacht und zur Prozessteuerung die entsprechenden Aktoren angesteuert. Die Datenübertragung zwischen Feldgerät und Steuereinheiten erfolgt nach bekannten internationalen Standards für Feldbusse, wie z. B. HART®, Foundation Fieldbus®, Profibus® oder CAN-Bus® etc.

In der Prozessautomatisierungstechnik werden häufig Feldgeräte unterschiedlicher Hersteller eingesetzt. Die Bedienung der Feldgeräte erfolgt mittels PC- basierenden Anwendungen, die insbesondere das Parametrieren, die Inbetriebnahme und die Diagnose einzelner Feldgeräte zum Teil auch graphisch unterstützen.

Beispiele für derartige Anzeige- und Bedienprogramme sind AMS® von Fisher-Rosemount, Simatic PDM® von Siemens, Smart Vision® von ABB, VVO® von Vega oder Commuwin® II von Endress+Hauser.

Um die Bedienung verschiedener Feldgeräte von einer Steuereinheit aus zu ermöglichen, muss dem Steuergerät die Funktionalität des jeweiligen Feldgerätes bekannt sein. Die Funktionalität des Feldgerätes wird mittels sogenannter Gerätebeschreibung (Device Descriptions DDs) beschrieben. Hierfür steht eine spezielle Sprache, die Device Descriptions Language DDL zur Verfügung. Mittels dieser standardisierten Sprache kann anderen Busteilnehmer insbesondere dem Leitsystem oder einem weiteren Bediengerät (Handheld) die notwendige Information über die Funktionalität eines bestimmten Feldgerätes zur Verfügung gestellt werden. In der Regel werden die Gerätebeschreibungen vom Feldgerätehersteller erstellt und mit dem jeweiligen Feldgerät z. B. per Diskette ausgeliefert.

Bei der Inbetriebnahme des Feldgeräts wird dann die entsprechende Gerätebeschreibung vom Anwendungsprogramm aus installiert.

Problematisch hierbei ist, dass Gerätebeschreibungen teilweise vom Hersteller aktualisiert werden. Dann müssen dem entsprechenden Anwender die aktuellen Gerätebeschreibungen (Updates) zugesandt werden und die dann per Hand nachträglich mittels des Anwendungsprogramms zu installieren sind.

Bei diesem Verfahren ist nicht sichergestellt, dass der Anwender die jeweils aktuelle Gerätebeschreibung im Einsatz hat. Insbesondere bei sicherheitsrelevanten Prozessanwendungen ist es zwingend notwendig, dass dem Anwender die aktuellste Gerätebeschreibung, insbesondere wenn Programmierfehler (Bugfixing) bei einer Gerätebeschreibungsversion aufgetreten sind, zur Verfügung steht.

Aufgabe der vorliegenden Erfindung ist es, ein Verfahren zum Aktualisieren von Gerätebeschreibungen für Feldgeräte in der Prozessautomatisierung anzugeben, das die oben genannten Nachteile nicht aufweist, das insbesondere eine einfachere und sichere Aktualisierung ermöglicht.

Gelöst wird diese Aufgabe durch das in Anspruch 1 angegebene Verfahren.

Die wesentliche Idee der Erfindung besteht darin, Gerätebeschreibungen für Feldgeräte auf einem zentralen Server zu spelchem und dass ein Anwendungsprogramm in einer Steuereinheit, das zum Bedienen eines Feldgerätes eine entsprechende Geräteinformation benötigt, diese nach Abfrage des Gerätetyps des Feldgeräts vom Server lädt.

Vorteilhafte Weiterentwicklungen der Erfindung sind in den Unteransprochen angegeben.

Nachfolgend ist die Erfindung anhand eines in der Zeichnung dargestellten Ausführungsbeispiels näher erläutert. Es zeigen:

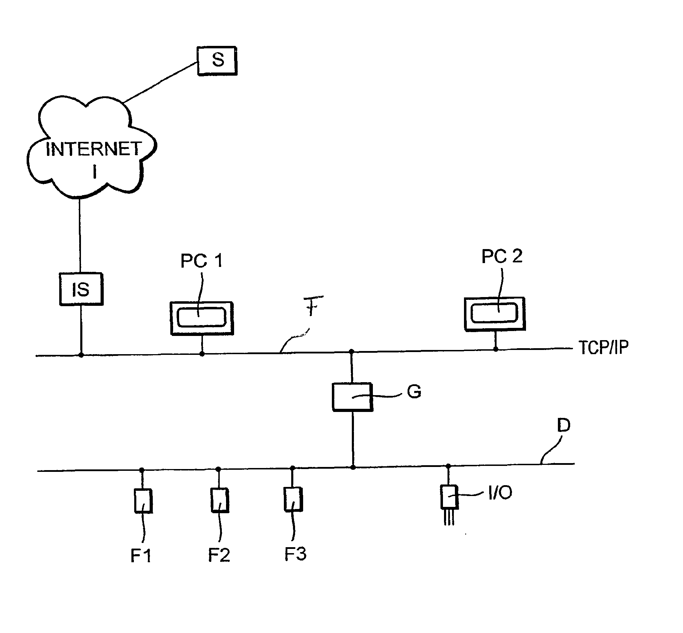

Fig. 1 Prozessautomatisierungsanlage in schematischer Daretellung.

In Fig. 1 ist eine Prozessautomatisierungsanlage mit mehreren Feldgeräten F1, F2, F3, die über einen Datenbus und ein Gateurray G mit einem Firmennetzwerk verbunden sind. Bei den Foldgeräten F1, F2, F3 kann es sich z. B. um Druckmesser, Temparaturmesser oder Durchflussmesser etc. handeln. Neben den Feldgeräten ist auch eine Remote I-O an den Datenbus angeschlossen. ober die Remote I-O können HART® - Feldgeräte an den Datenbus D angeschlossen werden. Bei dem Datenbus D kann es sich z. B. um eine Foundation Fieldbus® - H1-Bus handeln, Das Firmennetzwerk F In der Druckschrift US 2002/0004370 A1 ist ein Feldgerät der Prozessautomatisierungstechnik beschrieben, bei dem eine Steuerungsvorrichtung für das Feldgerät als separate tragbare Einheit vorgesehen ist. Das Feldgerät und die Steuerungsvorrichtung kommunizieren über eine Funkverbindung. Softwareänderungen der Software des Feldgerätes können durch die Steuerungsvorrichtung über das Internet geladen werden und anschließend auf das Feldgerät übertragen werden.

Die Druckschrift WO 02/39638 A2 beschreibt ein Verfahren, bei dem mehrere an das Internet angeschlossene Rechnereinheiten einer Anwendergruppe bilden und jeder Anwender spezielle Daten auf seiner Rechnereinheit für den Zugriff durch andere Anwender freigibt.

In den Druckschriften US 6,047,222 A und DE 100 29 448 A1 sind jeweils Feldbussysteme beschrieben, bei denen mindestens ein Feldgerät über eine Kommunikationsverbindung mit mindestens einer Steuereinheit verbunden ist. Die Druckschrift EP 0 989 713 A2 betrifft ein Verfahren für das Update von Intemetzugangsgeräten.

arbeitet z. B. nach dem Ethernet-Standard (TCP/IP-Protokoll). An das Firmennetzwerk F sind als Steuereinheiten zwei Rechner (z.B. Workstations oder PCs) PC1 und PC2 angeschlossen, die zum Steuern, Engineering oder Überwachen der Prozessanlage dienen. Weiterhin ist das Firmennetzwerk F mit einem Firewall IS verbunden, der über das Internet I mit einem entfernten Server S kommuniziert.

Nachfolgend ist das erfindungsgemäße Verfahren näher erläutert. Läuft z.B. in einer Steuereinheit z. B. Rechner PC1 eine spezielle Anwendung z. B. zum Bedienen, Konfigurieren, Parametrieren oder zur Diagnose eines Feldgeräts F1, F2, F3, die zu ihrem Betrieb Gerätebeschreibungen(Gerätebeschreibungen) zu Feldgeräten benötigt, so sendet das Anwendungsprogramm eine Anfrage an das zu bedienende Feldgerät z.B. F1 und fragt den Gerätetyp dieses Feldgeräts ab. Besitzt das Anwendungsprogramm in der Steuereinheit die benötigten Informationen zu diesem speziellen Feldgerät F1 nicht oder nicht in der aktuellen Version, so werden die notwendigen Gerätebeschreibungen via Internet vom Server S, auf dem die aktuellsten Gerätebeschreibungen abgespeichert sind, geladen.

Damit steht im Anwendungsprogramm immer die aktuellste Geräteinformation zur Verfügung. Um einen unnötigen Datentransfer zu vermeiden, wird die aktuelle Geräteinformation nur vom Server S geladen, wenn sie sich die in der Steuereinheit PC1 gespeicherte Geräteinformation von der im Feldgerät F1 abgespeicherten unterscheidet. Dies ist insbesondere bei der Inbetriebnahme des Feldgerätes der Fall, weil zu diesem Zeitpunkt in der Steuereinheit PC1 noch keine Informationen zu diesem Feldgerät abgespeichert sind.

Da sich Gerätebeschreibungen im Laufe der Zeit durch Aktualisierungen und Fehlerbehebungen (Bugfixing) ändern können, richtet das Anwendungsprogramm in regelmäßigen Abständen Anfragen an den Server S, ob geänderte Gerätebeschreibungen vorliegen.

In einfachster Weise erfolgt die Verbindung zwischen Steuereinheit PC1 oder PC2 und Server S via Internet I über den Firewall IS.

Die Verbindung zwischen Steuereinheit PC1 und Feldgerät F1 erfolgt über einen Datenbus D. Das Anzeige- und Bedienprogramm der Fa.

Endress+Hauser CommuWin II® erlaubt eine graphische Geräteparametrierung, die Gerätediagnose mit Fehlercode und Texterläuterung sowie die Gerätebedienung vorsieht. Für diese Anwendung werden als Gerätebeschreibungen Device Descriptions DDs benötigt.

In vorteilhafter Weise handelt es sich deshalb bei den Gerätebeschreibungen um Device Descriptions DD zu den Feldgeräten F1, F2, F3

Da sich nicht nur Gerätebeschreibungen im Laufe der Zeit ändern können, sondern auch Firmware zu bestimmten Feldgeräten, ist es sinnvoll, auch die aktuelle Firmware vom Server S zu laden.

Durch die Anfrage des Anwendungsprogramms an den Server S, werden spezifische Informationen unterschiedlicher Feldgeräte und unterschiedlicher Feldgeräteanwender zum Server S übertragen. Diese können im Server S zu statistischen Zwecken zwischengespeichert werden. Für den Anwender ist es sicher sehr vorteilhaft, wenn die aktualisierte Gerätebeschreibung bzw. die aktuelle Firmware automatisch installiert wird.

Ein weiterer Vorteil des erfindungsgemäßen Verfahrens besteht darin, dass vorkonfigurierte Gerätebeschreibungen für spezielle Anwendungen eines Feldgerätes im Server S abgespeichert sind und nach entsprechender Auswahl vom Anwender vom Anwendungsprogramm aus geladen werden. Dadurch wird das Parametrieren von Feldgeräten erheblich erleichtert. Teilweise verwenden Anwendungsprogramme (z.B. ToF-Tool® von Endress+Hauser) auch die entsprechende Landessprache.

In einfacher Weise werden die Gerätebeschreibungen in der jeweiligen Landessprache abgespeichert. Damit werden dem Anwender die benötigten Informationen in seiner Landessprache zur Verfügung gestellt und Übersetzungsfehler können leicht korrigiert werden.

Mit Hilfe des erfindungsgemäßen Verfahrens ist gewährleistet, dass einem Anwendungsprogramm immer die aktuellsten Gerätebeschreibungen zur Verfügung stehen.

## Patentansprüche

1. Verfahren zum Aktualisieren von Gerätebeschreibungen für Feldgeräte der Prozessautomatisierungstechnik,
wobei die Funktionalität eines Feldgerätes mittels der Gerätebeschreibung beschrieben wird,
**dadurch gekennzeichnet, dass** ein Anwendungsprogramm in einer Steuereinheit (PC1; PC2) Gerätebeschreibungen für Feldgeräte (F1, F2, F3) von einem externen Server (S) lädt,
wobei vom Anwendungsprogramm eine Anfrage an ein Feldgerät gesendet wird und der Gerätetyp des Feldgerätes abgefragt wird,
dass in dem Fall, dass das Anwendungsprogramm die benötigten Informationen zu dem Feldgerät nicht oder nicht in der aktuellen Version besitzt, die notwendigen Gerätebeschreibungen via Internet vom externen Server geladen werden, auf welchem externen Server die aktuellsten Gerätebeschreibungen gespeichert sind,
und dass das Anwendungsprogramm in regelmäßigen Abständen Anfragen an den externen Server (S) richtet, ob neue Gerätebeschreibungen vorliegen.

2. Verfahren nach einem der vorhergehenden Ansprüche, **dadurch gekennzeichnet, dass** es sich bei den Gerätebeschreibungen um Device Descriptions DDs handelt.

3. Verfahren nach einem der vorhergehenden Ansprüche, **dadurch gekennzeichnet, dass** im Server (S) vorkonfigurierte Gerätebeschreibungen abgespeichert sind.

4. Verfahren nach einem der vorhergehenden Ansprüche, **dadurch gekennzeichnet, dass** die Gerätebeschreibungen im Server (S) in der jeweiligen Landessprache abgespeichert sind.

5. Verfahren nach einem der vorhergehenden Ansprüche, **dadurch gekennzeichnet, dass** die Steuereinheit (PC1; PC2) und der Server (S) über das Internet (I) miteinander verbunden sind.

## Claims

1. Procedure designed to update device descriptions for field devices used in process automation engineering,
wherein the functionality of a field device is described by the device description, **characterized in that** an application program in a control unit (PC1, PC2) loads device descriptions for field devices (F1, F2, F3) from an external server (S),
wherein a request is sent by the application program to a field device and the device type of the field device is interrogated,
**in that** in situations where the application program does not have the required information about the field device, or does not have the latest information version, the necessary device descriptions are loaded via the internet from the external server on which the latest device descriptions are saved,
and **in that** the application program sends queries to the external server (5) at regular intervals to check whether new device descriptions are available.

2. Procedure as claimed in one of the previous claims, **characterized in that** the descriptions are Device Descriptions DD.

3. Procedure as claimed in one of the previous claims, **characterized in that** preconfigured device descriptions are saved on the server (S).

4. Procedure as claimed in one of the previous claims, **characterized in that** the device descriptions on the server (S) are saved in the individual national language.

5. Procedure as claimed in one of the previous claims, **characterized in that** the control unit (PC1, PC2) and the server (S) are interconnected via the Internet (I).

## Revendications

1. Procédé destiné à l'actualisation de descriptions d'appareil pour des appareils de terrain de la technique d'automatisation des process,
pour lequel la fonctionnalité d'un appareil de terrain est décrite au moyen de la description d'appareil,
**caractérisé en ce qu'**un programme d'application charge dans une unité de commande (PC1, PC2) des descriptions d'appareil pour les appareils de terrain (F1, F2, F3) depuis un serveur externe (S),
pour lequel une demande est émise par le programme d'application à un appareil de terrain et le type d'appareil est interrogé par l'appareil de terrain,
**en ce que** dans le cas où le programme d'application ne possède pas les informations nécessaires relatives à l'appareil de terrain, ou pas dans la version actuelle, les descriptions d'appareil nécessaires sont chargées via Internet depuis le serveur externe, serveur externe sur lequel sont enregistrées les descriptions d'appareil les plus actuelles et **en ce que** le programme d'application adresse à intervalles réguliers au serveur externe (S) des demandes concernant la présence éventuelle de nouvelles descriptions d'appareil.

2. Procédé selon la revendication précédente, **caractérisé en ce que**, concernant les descriptions d'appareil, il s'agit de Device Descriptions DD.

3. Procédé selon l'une des revendications précédentes, **caractérisé en ce que** des descriptions d'appareil préconfigurées sont enregistrées sur le serveur (S).

4. Procédé selon l'une des revendications précédentes, **caractérisé en ce que** les descriptions d'appareil sont enregistrées sur le serveur (S) dans la langue nationale respective.

5. Procédé selon l'une des revendications précédentes, **caractérisé en ce que** l'unité de commande (PC1, PC2) et le serveur (S) sont reliés entre eux par le biais d'Internet (I).
